# EUROPÄISCHE PATENTSCHRIFT

(11) **EP 1 683 767 B1**
(45) Veröffentlichungstag und Bekanntmachung des Hinweises auf die Patenterteilung: **03.03.2010**
(21) Anmeldenummer: 06000215.1
(22) Anmeldetag: 05.01.2006
(51) Int. Cl.: C03C 3/089, C03C 8/02, C03C 8/14, C03C 17/04

(54) **Verwendung eines blei- und cadmiumfreies Glases zum Glasieren, Emaillieren und Dekorieren von Gläsern oder Glaskeramiken**
Use of a lead-free and cadmium-free glass for glazing, enameling and decoration of glasses or glass-ceramics
Utilisation d'un verre sans plomb et cadmium pour le glaçage, l'émaillage et la décoration de verres ou de vitro-céramiques

(30) Priorität: 24.01.2005 DE 102005004068
(43) Veröffentlichungstag der Anmeldung: 26.07.2006
(73) Patentinhaber: Schott AG, 55122 Mainz (DE)
(72) Erfinder: MITRA, Dr. Ina, 55271 Stadecken-Elsheim (DE); STRIEGLER, Dr. Harald, 55437 Ockenheim (DE)
(74) Vertreter: Gahlert, Stefan

(56) Entgegenhaltungen:
- EP-A- 0 313 904
- EP-A- 0 509 792
- EP-A- 0 771 765
- EP-A- 0 776 867
- EP-A- 0 978 493
- DE-C1- 4 230 607

## Beschreibung

Die Erfindung betrifft die Verwendung eines blei- und cadmiumfreien Glases zum Glasieren, Emaillieren und Dekorieren von Gläsern oder Glaskeramiken.

Gläser zum Glasieren, Emaillieren und Dekorieren von Gläsern oder Glaskeramiken sind seit Jahrtausenden bekannt. Sollen diese jedoch auf Gläser oder Glaskeramiken mit einem geringen thermischen Ausdehnungskoeffizienten beispielsweise von weniger als 2 · 10⁻⁶/K zwischen 20 und 700°C aufgetragen werden, so werden hieran spezielle Anforderungen gestellt. Derartige Basismaterialien werden üblicherweise zum Beispiel als temperaturstabile Laborgeräte, Kochgeschirre, Brandschutzgläser, Kaminsichtscheiben, beheizbare Platten und insbesondere auch als Kochflächen eingesetzt.

Eine Glasur oder ein Email dient im Allgemeinen entweder zur Veränderung der Oberflächeneigenschaften des Trägermaterials, zum Beispiel zur Beschichtung des Substrats zum Schutz vor chemischem oder physikalischem Angriff, zur Unterstützung der Bauteilfunktion, zum Beispiel als Markierung, oder zur Verzierung der Oberfläche. Die gegebenenfalls in einer Glasur oder einem Email enthaltenen Pigmente erhöhen die Deckkraft und bewirken einen bestimmten Farbeindruck. Der gewünschte Farbeindruck kann aber auch über die Verwendung färbender Oxide, die sich im Glas lösen und somit eine gefärbte Glasur erzeugen, erreicht werden.

Das Einbrennen der Glasur bzw. des Emails erfolgt üblicherweise bei Temperaturen, die unterhalb des Erweichungsbereiches des Trägermaterials liegen, aber ausreichend hoch sind, um ein glattes Aufschmelzen der Glasur und ein inniges Verbinden mit der Oberfläche des Trägermaterials zu gewährleisten.

Eine Möglichkeit der Herstellung von Glasuren besteht in dem Einschmelzen der Glasurrohstoffe zu einem Glas, das nach dem Erschmelzen und Abkühlen aufgemahlen wird. Das Mahlprodukt wird als Glasfritte bezeichnet. Eine solche Glasfritte wird üblicherweise mit geeigneten Hilfsstoffen, zum Beispiel Suspendiermitteln, versetzt, die dem Auftragen der Glasur/des Emails dienen. Die Applizierung kann beispielsweise über Siebdruck-, Abziehbild-, Sprüh- oder Pinselverfahren erfolgen. Die notwendigen, meist organischen Hilfsmittel verflüchtigen sich beim Einbrennen.

Werden Gläser oder Glaskeramiken in den zuvor erwähnten Anwendungsbereichen eingesetzt, so ergeben sich unterschiedliche Anforderungen an die Glasur bzw. an das Email. So muss die Glasur/das Email ausreichend thermisch, chemisch und physikalisch beständig sein, also insbesondere gegenüber den im Labor bzw. im Haushalt üblichen chemischen und physikalischen Angriffen beständig sein. In den üblichen Anwendungsfällen darf sich der Farbeindruck der Glasur/des Emails nicht oder nur sehr geringfügig verändern. Dies führt unter anderem zu weiteren Anforderungen an die Stabilität der verwendeten Pigmente.

Die Haltbarkeit von Glasuren und Emails auf einem Trägermaterial wird wesentlich durch die Ausbildung von Spannungen bestimmt, wobei zu hohe Spannungen zu Abplatzungen führen. Diese Spannungen entstehen unter anderem durch die Unterschiede thermischen Ausdehnungsverhaltens von Email und Substrat, so dass einer Anpassung der thermischen Ausdehnung des Dekors an das Trägermaterial eine hohe Bedeutung zukommt. Im Allgemeinen wird eine Glasur angestrebt, die eine im Vergleich zum Trägermaterial geringfügig niedrigere thermische Ausdehnung aufweist. Die nach dem Abkühlen entstehenden Druckspannungen zwischen Glasur und Trägermaterial wirken sich dann nicht negativ aus.

Bei Gläsern und Glaskeramiken mit sehr niedriger Wärmeausdehnung, die je nach Temperaturbereich in der Nähe von Null liegen kann, ist eine derartige Einstellung des thermischen Ausdehnungskoeffizienten der Glasur im Allgemeinen nicht möglich. Stattdessen wird bei Gläsern und Glaskeramiken mit sehr niedriger Wärmeausdehnung diesem Problem in der Praxis durch das Auftragen sehr dünner Schichten begegnet, wobei die dabei verwendeten Glasurgläser durchaus höhere thermische Ausdehnungskoeffizienten aufweisen können als das Trägermaterial. Bei sehr dünnen Schichten ist ein relativ großer Unterschied der thermischen Ausdehnungskoeffizienten tolerierbar. Die ausreichende Haltbarkeit der Glasur wird dabei der Elastizität der Glasurschicht zugeschrieben.

Um einen möglichst geringen Einfluss der aufgebrachten Glasurschicht auf das Festigkeitsniveau des Trägermaterials zu erreichen, werden möglichst dünne Schichten angestrebt, da eine derartige Oberflächenschicht im Allgemeinen das Festigkeitsniveau des Trägermaterials herabsetzt. Fällt die Glasur jedoch extrem dünn aus, so ist eine ausreichende Beständigkeit gegen den labor- bzw. haushaltsüblichen chemischen und physikalischen Angriff ebenso wie ein intensiver Farbeindruck nicht mehr gewährleistet.

In neuerer Zeit werden ferner zunehmend Glasuren gefordert, die frei von toxikologisch bedenklichen Komponenten, wie Blei- und Cadmiumverbindungen, sind.

Derartige blei- und cadmiumfreie Glasuren sind grundsätzlich bereits bekannt, weisen jedoch beim Beschichten von Gläsern und Glaskeramiken mit sehr niedrigem Ausdehnungskoeffizienten nicht die notwendige Festigkeit auf.

Aus der US 5,326,728 ist eine Glasfritte zum Emaillieren von Glaskeramiken mit niedriger thermischer Ausdehnung bekannt, die 1 bis 3 Gew.-% Li₂O, 0 bis 3 Gew.-% Na₂O, 2 bis 5 Gew.-% K₂O, 23 bis 30 Gew.-% B₂O₃, 10 bis 22 Gew.-% Al₂O₃, 35 bis 50 Gew.-% SiO₂, 0 bis 5 Gew.-% ZrO₂ aufweist, wobei der Summengehalt an BaO, CaO, MgO, ZnO, SrO kleiner 7 Gew.-% ist, und wobei der Summengehalt von Alkalioxiden kleiner als 8 Gew.-% ist. Eine hohe chemische Beständigkeit kann bei dem auf maximal 50 Gew.-% limitierten SiO₂-Gehalt nicht erreicht werden. Auch wird mit einer derartigen Glasur keine hohe Festigkeit des dekorierten Gegenstandes erzielt.

Aus der EP 0 771 765 A1 ist eine Glasur bekannt, die aus 30 bis 94 Gew.-% Glasfritte, 5 bis 69 Gew.-% TiO₂-Pulver und 0,05 bis 34 Gew.-% Pigment besteht. Die Glasfritte enthält 0 bis 5 Gew.-% Li₂O, 0 bis 10 Gew.-% Na₂O, 0 bis 5 Gew.-% K₂O, 1 bis 10 Gew.-% BaO, 0,1 bis 3 Gew.-% ZnO, 10 bis 30 Gew.-% B₂O₃, 1 bis 10 Gew.-% Al₂O₃, 45 bis 75 Gew.-% SiO₂ und 0 bis 2 Gew.-% F⁻. Das hierbei zugesetzte TiO₂-Pulver muss dabei besonderen Bedingungen genügen, insbesondere eine hohe Mahlfeinheit aufweisen, und bedeutet für den Gesamtprozess der Glasurherstellung zusätzlichen Aufwand, den es zu vermeiden gilt. Aufgrund der Farbwirkung von TiO₂ als Weißpigment bedingt der Einsatz von TiO₂ eine Einschränkung in den farblichen Gestaltungsmöglichen, insbesondere bei dunklen Farben.

Aus der EP 0 776 867 A1 ist eine Glasur zum Emaillieren von Glaskeramik mit niedriger thermischer Ausdehnung bekannt, die neben 40 bis 98 Gew.-% Glasfritte 1 bis 55 Gew.-% Pigmente und fakultativ einen zusätzlichen Füllstoff von bis zum 54 Gew.-% enthält. Die Glasfritte besteht aus 0 bis 2 Gew.-% Li₂O, 5,1 bis 15 Gew.-% Na₂O, 0 bis 2,8 Gew.-% K₂O, 14 bis 22 Gew.-% B₂O₃, 4 bis 8 Gew.-% Al₂O₃, 55 bis 72 Gew.-% SiO₂ und 0 bis 2 Gew.-% F⁻. Der Füllstoff besteht hierbei aus hochschmelzendem ZrO₂ und/oder Zirkon. Der relativ hohe Na₂O-Gehalt von 5,1 bis 15 Gew.-% führt zu einer verschlechterten chemischen Beständigkeit der Glasur.

Eine weitere aus der JP-A-07061837 (Patent Abstracts of Japan) bekannte Zusammensetzung zum Emaillieren von Glaskeramiken mit niedriger thermischer Ausdehnung enthält 25 bis 55 Gew.-% Glasfritte, 0,1 bis 20 Gew.-% eines feuerfesten Füllstoffes und 3 bis 25 Gew.-% eines temperaturbeständigen Pigmentes. Die Glasfritte weist 50 bis 75 Gew.-% SiO₂ auf, 0,5 bis 15 Gew.-% Al₂O₃, 5 bis 30 Gew.-% B₂O₃, 0 bis 7 Gew.-% BaO, 0 bis 2 Gew.-% Li₂O, 0 bis 5 Gew.-% Na₂O, 0 bis 4 Gew.-% K₂O und 0 bis 2 Gew.-% Fe₂O₃ auf. Der Zusatz des hochschmelzenden Füllstoffes bedeutet einen zusätzlichen Verarbeitungsaufwand bei der Glasurherstellung. Ferner wird hierdurch ein zügiges und gleichmäßiges Aufschmelzen der Glasur behindert. Auch ist die mit dem Einsatz von ZrO₂ verbundene Färbung oft unerwünscht.

Aus der DE 197 21 737 C1 ist ferner eine blei- und cadmiumfreie Glaszusammensetzung zum Glasieren, Emaillieren und Dekorieren von Gläsern oder Glaskeramiken mit niedriger thermischer Ausdehnung bekannt. Die Glasfritte enthält 0 bis 5 Gew.-% Li₂O, 0 bis 5 Gew.-% Na₂O, weniger als 2 Gew.-% K₂O, 0 bis 3 Gew.-% MgO, 0 bis 4 Gew.-% CaO, 0 bis 4 Gew.-% SrO, 0 bis 4 Gew.-% BaO, 0 bis 4 Gew.-% ZnO, 15 bis 27 Gew.-% B₂O₃, 10 bis 20 Gew.-% Al₂O₃, 43 bis 58 Gew.-% SiO₂, 0 bis 4 Gew.-% ZrO₂ und 0 bis 3 Gew.-% F⁻. Bei relativ geringen Alkaligehalten bis maximal 10 Gew.-% werden relativ hohe Anteile an glasbildenden Oxiden (64 bis 75 Gew.-%) eingesetzt, zum Beispiel 10 bis 20 Gew.-% Al₂O₃, die die Einschmelztemperatur des Frittenmaterials erhöhen.

Aus der DE 198 34 801 A1 ist ferner eine blei- und cadmiumfreie Glaszusammensetzung zum Glasieren, Emaillieren und Dekorieren von Gläsern oder Glaskeramiken mit niedriger thermischer Ausdehnung bekannt, die 0 bis 6 Gew.-% Li₂O, 0 bis 5 Gew.-% Na₂O, weniger als 2 Gew.-% K₂O, einen Alkalioxidgehalt zwischen 2 und 12 Gew.-%, 0 bis 4 Gew.-% MgO, 0 bis 4 Gew.-% CaO, 0 bis 4 Gew.-% SrO, 0 bis 1 Gew.-% BaO, 0 bis 4 Gew.-% ZnO, 3 bis weniger als 10 Gew.-% Al₂O₃, 50 bis 65 Gew.-% SiO₂, 0 bis 4 Gew.-% ZrO₂, 0 bis 4 Gew.-% TiO₂ und 0 bis 4 Gew.-% F⁻ aufweist.

Aus der EP 1 119 524 B1 ist ferner eine Glasur zum Emaillieren von Glaskeramiken mit niedriger thermischer Ausdehnung, wie etwa Kochplatten, bekannt, die 70 bis 82 Gew.-% SiO₂, 12 bis 18 Gew.-% B₂O₃, 1 bis 3 Gew.-% Al₂O₃, einen Summengehalt von Na₂O und K₂O von höchstens 5 Gew.-% und 10 bis 35 Gew.-% Pigmente enthält.

Der sehr hohe Gehalt an SiO₂, der mindestens 70 Gew.-% beträgt, führt ohne geeignete Zusätze zu einem schlechten Aufschmelzen der Glasur, was zu porösen Glasstrukturen führt, die sich schlecht reinigen lassen.

Aus der FR 2 732 960 A1 ist ferner eine Glasfritte zum Emaillieren bekannt, die 0 bis 2 Gew.-% Li₂O, 0 bis 3 Gew.-% Na₂O, 0 bis 3 Gew.-% K₂O mit einem Summenalkalioxidgehalt von weniger als 4 Gew.-% aufweist, wobei ferner 0 bis 9 Gew.-% MgO, 0 bis 12 Gew.-% CaO, 0 bis 16 Gew.-% SrO, 0 bis 27 Gew.-% BaO, 0 bis 17 Gew.-% ZnO, 0 bis 10 Gew.-% B₂O₃, 6 bis 17 Gew.-% Al₂O₃, 45 bis 60 Gew.-% SiO₂ und 0 bis 7 Gew.-% ZrO₂ enthalten sind. Die Summe der Erdalkalioxide beträgt hierbei 22 bis 42 Gew.-%. Der begrenzte Gehalt an Alkalioxiden kann zu Problemen des Aufschmelzens führen und poröse Glasstrukturen nach sich ziehen, die sich schlecht reinigen lassen.

Aus der EP 1 275 620 A1 ist ferner eine bleifreie Glasur zum Emaillieren von Gläsern und Glaskeramiken bekannt, die 0 bis 7 Gew.-% Li₂O, 0 bis 7 Gew.-% Na₂O, 0 bis 7 Gew.-% K₂O mit einem Summenalkalioxidgehalt von mehr als 4 Gew.-%, 0 bis 12 Gew.-% CaO, 13 bis 27 Gew.-% BaO, 3 bis 17 Gew. ZnO, 0 bis 10 Gew.-% B₂O₃, 6 bis 17 Gew.-% Al₂O₃, 45 bis 60 Gew.-% SiO₂ enthält.

Aus der DE 42 01 286 A1 ist eine weitere Glaszusammensetzung zum Glasieren, Emaillieren und Verzieren von Gläsern oder Glaskeramiken bekannt, die 0 bis 12 Gew.-% Li₂O, 0 bis 10 Gew.-% MgO, 3 bis 18 Gew.-% CaO, 5 bis 25 Gew.-% B₂O₃, 3 bis 18 Gew.-% Al₂O₃, 3 bis 18 Gew.-% Na₂O, 3 bis 18 Gew.-% K₂O, 0 bis 12 Gew.-% BaO, 25 bis 55 Gew.-% SiO₂, 0 bis 5 Gew.-% TiO₂ und 0 bis <3 Gew.-% ZrO₂ enthält.

Aus der EP-A-0 313 904 ist ein bleifreies Glas mit Glasuren mit Canasit-Glaskeramiken bekannt. Das Glas weist 55 bis 75 mol-% SiO₂, 8 bis 13 mol-% B₂O₃, 0,5 bis 3 mol-% Al₂O₃, 3 bis 9 mol-% Na₂O, 2 bis 5 mol-% ZrO₂ und 0,5 bis 16 mol-% BaO auf. Die zu beschichtenden Glaskeramiken weisen eine starke thermische Ausdehnung auf mit einem Ausdehnungskoeffizienten von etwa 9 bis 12 ppm/K.

Aus der DE 42 30 607 C1 ist ferner ein chemisch hochresistentes, mit Wolfram verschmelzbares Borosilikatglas bekannt, das 70 bis 78 Gew.-% SiO₂, 9 bis 12 Gew.-% B₂O₃, 1,5 bis 4 Gew.-% Al₂O₃, 0 bis 4 Ges.-% Li₂O, 1 bis 5 Gew. -% Na₂O₁, 1 bis 5 Gew. -% K₂O, 5 bis 7 Gew.-% R₂O, 0 bis 3 Gew. -% MgO, 1 bis 3 Gew. -% CaO, 0 bis 2 Gew.-% BaO + SrO, 0 bis 2 Gew.-% ZnO, 0,5 bis 3 Gew.-% ZrO₂, und einen Summengehalt von 6 bis 10 Gew.-% MgO + CaO + BaO + SrO + ZnO + ZrO₂ aufweist.

Aus der EP-A-0 509 792 ist ein Glas zum Glasieren unterschiedlicher Keramiken mit Ausdehnungskoeffizienten von 5 bis 10 ppm/K bekannt, das blei- und cadmiumfrei ist und 45 bis 75 Gew.-% SiO₂, 0,1 bis 5 Gew.-% Bi₂O₃, 0,1 bis 20 Gew.-% Al₂O₃, 2 bis 20 Gew.-% B₂O₃, 2 bis 22 Gew.-% CaO, MgO, SrO, BaO oder ZnO, bis 10 Gew. -% Li₂O, Na₂O, R₂O aufweist, 0,1 bis 10 Gew.-% La₂O3, MoO₃, WO₃, 0 bis 10 Gew. -% TiO₂, 0 bis 10 Ges.-% ZrO₂, 0 bis 5 Gew.-% P₂O₅, 0 bis 1 Gew-% V₂O₅, 0 bis 5 Gew.-% Fluoridionen aufweist.

Sämtliche der zuvor erwähnten Glaszusammensetzungen zum Glasieren, Emaillieren und Dekorieren von Gläsern oder Glaskeramiken weisen für viele Anwendungszwecke keine ausreichend hohe Festigkeit der Glasur auf, insbesondere wenn die beschichteten Gegenstände einen niedrigen thermischen Ausdehnungskoeffizienten besitzen.

Vor diesem Hintergrund besteht die Aufgabe der Erfindung darin, ein blei- und cadmiumfreies Glas anzugeben, das insbesondere eine hohe Festigkeit des dekorierten Materials auch bei Beschichtung von Gläsern oder Glaskeramiken mit niedriger thermischer Ausdehnung gewährleistet. Hierbei soll eine möglichst einfache Verarbeitung ermöglicht sein und gleichzeitig möglichst gute Eigenschaften bezüglich Haftung, Farbkonstanz, chemischer, thermischer und abrasiver Beständigkeit erreicht werden, auch wenn das Glas als Fritte mit einem Zusatz von bis zu 30 Gew.-% eines temperaturstabilen Pigmentes versehen wird.

Diese Aufgabe wird durch die Verwendung eines blei- und cadmiumfreien Glases mit den Merkmalen des Anspruchs 1 gelöst. Vorteilhafte Weiterbildungen sind in den abhängigen Ansprüchen gekennzeichnet.

Die Aufgabe der Erfindung wird diese Weise vollkommen gelöst, da das erfindungsgemäß verwendete Glas eine hohe Biegefestigkeit beim Beschichten von Gläsern oder Glaskeramiken mit einem thermischen Ausdehnungskoeffizienten von höchstens 4 · 10⁻⁶/K, insbesondere von höchstens 3,5 · 10⁻⁶/K, insbesondere von höchstens 2 · 10⁻⁶/K zwischen 20 und 700 °C aufweist. Dabei lassen sich auf den beschichteten Gegenständen Biegebruchfestigkeiten von mindestens 70 MPa erreichen.

Das erfindungsgemäß verwendete Glas wird in bevorzugter Weiterbildung der Erfindung zu einer Glasfritte vermahlen, die vorzugsweise einen mittleren Partikeldurchmesser von höchstens 10 µm, bevorzugt von weniger als 6 µm, weiter bevorzugt von weniger als 4 µm, besonders bevorzugt von weniger als 3 µm aufweist.

Die Glasfritte kann gemäß einer weiteren Ausgestaltung der Erfindung mit Pigmenten, Füll- und Zusatzstoffen versetzt sein, die vorzugsweise insgesamt höchstens 40 Gew.-%, weiter bevorzugt insgesamt höchstens 30 Gew.-% ausmachen.

Das erfindungsgemäß verwendete Glas setzt sich aus netzwerkbildenden und ggf. netzwerkwandelnden Oxiden sowie Komponenten zur Senkung der Viskosität und der Einschmelztemperatur zusammen.

Das Netzwerk des Glases wird hauptsächlich durch den SiO₂-Anteil gebildet. Die chemische Beständigkeit wird maßgeblich durch SiO₂ bestimmt. Der hohe SiO₂-Gehalt von mehr als 65 Gew.-% führt zu einem chemisch sehr beständigen Glas. Der bevorzugte Zusammensetzungsbereich liegt zwischen > 65 Gew.-% und maximal 75 Gew.-% SiO₂, damit die Einschmelztemperatur nicht zu hoch wird.

Die netzwerkwandelnden Erdalkalien und ZnO wirken sich günstig auf das Viskositätsverhalten des Glases aus, jedoch in einem geringeren Ausmaß als beim Einsatz von Alkalioxiden. Hohe Gehalte an MgO, CaO, SrO und BaO sowie ZnO führen zu einer Absenkung der Festigkeit, so dass der Gehalt an MgO, CaO, SrO und BaO höchstens auf maximal je 8 Gew-%, bevorzugt auf höchstens je 6 Gew.-%, beschränkt ist. Der Gehalt an ZnO ist vorzugsweise auf 6 Gew.-% beschränkt. Der Summengehalt MgO+CaO+SrO+BaO beträgt vorzugsweise mindestens 1 und höchstens 22 Gew. -%. Der Gehalt an MgO beträgt mindestens 1 Gew.-%

Ein hohes Absenken der Viskosität und somit ein gutes Einbrennen der Glasur wird durch einen Zusatz von B₂O₃ erreicht, wozu vorzugsweise mindestens 6,5 Gew.-% an B₂O₃ zugesetzt werden können. Prinzipiell trägt ein Zusatz von B₂O₃ zur Stabilisierung des Glases gegen eine Kristallisation bei. Dem gegenüber wird bei Gehalten über 22 Gew.-% die chemische Beständigkeit in diesem Glassystem deutlich herabgesetzt.

Der bevorzugte Bereich an B₂O₃ beträgt daher mindestens 6,5 Gew.-%, insbesondere 10 und 20 Gew.-%.

Die chemische Beständigkeit des Glases wird ferner durch Zusätze von Al₂O₃ und ggf. durch Zusätze von TiO₂, ZrO₂ und/oder SnO₂ gefördert. Zu hohe Gehalte dieser Oxide führen wiederum zu einer deutlichen Viskositätssteigerung sowohl beim Erschmelzen des Glases als beim Einbrennen auf das Trägermaterial.

Vorzugsweise werden mindestens 0,1 Gew.-% Al₂O₃ zugesetzt, bevorzugt mindestens 3 Gew.-%, während der maximale Gehalt an Al₂O₃ vorzugsweise auf 10 Gew.-% begrenzt ist.

Ein schlechtes Einbrennverhalten durch eine hohe Viskosität führt zu porösen Strukturen mit schlechtem Reinigungsverhalten der Gläser. Deshalb werden die Gehalte an TiO₂ und ZrO₂ vorzugsweise auf jeweils 4 Gew.-% und im bevorzugten Bereich auf maximal 3 Gew.-% begrenzt.

Die Absenkung der Viskosität und ein günstiges Ein- bzw. Aufschmelzverhalten wird durch die Verwendung der Alkalien Li₂O, Na₂O und K₂O erzielt, die sich jedoch nachteilig auf die chemische Beständigkeit und die Festigkeit des mit der Glasschicht überzogenen Substrates auswirken. Auch wird die thermische Ausdehnung des Glases hierdurch deutlich erhöht. Dabei wirkt sich die Komponente K₂O besonders günstig auf die Haftfähigkeit aus, hat dem gegenüber aber auch die stärkste festigkeitssenkende Wirkung. Die Gehalte dieser Komponenten werden daher vorzugsweise auf maximal 2 Gew.-% K₂O, maximal 6 Gew.-% Li₂O, bevorzugt maximal 5,8 Gew.-% begrenzt. Der Gehalt an Na₂O beträgt maximal 5 Gew.-%.

Die Einschmelzbarkeit kann durch weitere Zusätze wie La₂O₃, Bi₂O₃ und/oder P₂O₅, verbessert werden. Die Haftfestigkeit kann insbesondere durch Zusätze von Sb₂O₃ verbessert werden, wobei zu hohe Gehalte jedoch zur Verschlechterung der chemischen Beständigkeit führen.

In ähnlicher Weise wirken Zusätze von Fluor, die sich im oxidischen Glasnetzwerk als F⁻-Ionen auf Anionenplätze des Gerüstsauerstoffes einbauen. Deshalb wird der Fluor-Gehalt vorzugsweise auf 4 Gew.-%, insbesondere auf höchstens 3 Gew.-% begrenzt.

Der maximale Anteil der Komponenten SnO₂, Sb₂O₃, La₂O₃, Bi₂O₃ und P₂O₅ wird vorzugsweise auf je 3 Gew.-% begrenzt, insbesondere wenn mehrere dieser Oxide gleichzeitig eingesetzt werden, ist die Summe dieser Oxide vorzugsweise kleiner als 5 Gew.-%.

Das erfindungsgemäß verwendete Glas wird vorzugsweise zunächst erschmolzen und dann zu einer Glasfritte vermahlen, die einen mittleren Partikeldurchmesser von höchstens 10 µm, vorzugsweise von weniger als 6 µm, weiter bevorzugt von weniger als 4 µm, besonders bevorzugt von weniger als 3 µm aufweist.

Wie bereits erwähnt, kann die gemahlene Glasfritte mit Pigmenten, Füll- und Zusatzstoffen versetzt werden, wobei vorzugsweise insgesamt höchstens 40 Gew.-%, weiter bevorzugt von insgesamt höchstens 30 Gew.-% zugesetzt werden.

Das erfindungsgemäß verwendete Glas eignet sich besonders zum Glasieren, Emaillieren oder Dekorieren von Gläsern oder Glaskeramiken, mit einem thermischen Ausdehnungskoeffizienten von höchstens 4 • 10⁻⁶/K, insbesondere von höchstens 3,5 • 10⁻⁶/K. Eine besonders vorteilhafte Anwendung liegt beim Glasieren von Lithium-Aluminosilikat-Glaskeramiken (LAS), insbesondere mit Hochquarz-Mischkristallen als Hauptkristallphase, die einen thermischen Ausdehnungskoeffizienten von weniger als 2 · 10⁻⁶/K zwischen 20 und 700°C aufweisen. Solche Glaskeramiken werden insbesondere für Kochflächen verwendet, wie beispielsweise die von der Anmelderin hergestellten und unter der Marke Ceran® vertriebenen Kochflächen.

Der Einbrennvorgang erfolgt vorzugsweise zwischen Temperaturen von etwa 800 und 1.200°C. Sollen Glaskeramiken emailliert werden, die als Hauptkristallphase Hochquarz-Mischkristalle aufweisen, so erfolgt der Einbrennvorgang vorzugsweise zwischen etwa 800 und 950°C.

Die Schichtdicke der eingebrannten Glasur kann beispielsweise zwischen 1 und 5 µm eingestellt werden.

Der Einbrennvorgang kann gleichzeitig mit der Keramisierung der Glaskeramik durchgeführt werden.

Alternativ kann der Einbrennvorgang auch nach Abschluss der Keramisierung der Glaskeramik in einem separaten Schritt ausgeführt werden.

Das Erweichungsverhalten des erfindungsgemäß verwendeten Glases kann so eingestellt werden, dass bei den jeweiligen Prozesstemperaturen ein glattes Aufschmelzen einerseits und andererseits eine ausreichende Standfestigkeit zur Erhaltung der Konturenschärfe des aufgebrachten Designs sichergestellt ist.

Die mit den erfindungsgemäß verwendeten Gläsern beschichteten Glaskeramiken oder Gläser niedriger thermischer Ausdehnung halten in der Praxis üblicherweise auftretenden Belastungsfällen stand. Eine gute Haftfestigkeit der Glasurschicht ist auch nach Langzeittemperung, bei der keine Veränderung des Farbeindruckes auftritt, und nach häufigen Temperaturwechselzyklen gegeben. Ebenso ist die Anforderung nach guter chemischer Beständigkeit erfüllt. Im Übrigen weisen die erfindungsgemäßen Gläser weitere vorteilhafte Eigenschaften wie zum Beispiel geringes Abtragsverhalten, Unempfindlichkeit gegenüber Flecken oder Beständigkeit gegen haushaltsübliche Reinigungsmittel auf.

Ein besonderer Vorteil der erfindungsgemäß verwendeten Gläser besteht in der hohen Festigkeit der mit den erfindungsgemäßen Gläsern beschichteten Substrate. Es lassen sich bei Beschichtung von

Substraten ohne Pigmentzusatz sehr hohe Festigkeiten von mindestens 70 MPa erzielen.

Werden den erfindungsgemäß verwendeten Gläsern Pigmente zugesetzt (vorzugsweise bis zu 30 %), so kann sich erfahrungsgemäß das jeweils einstellende Festigkeitsniveau verändern. Ferner kann sich das einstellende Festigkeitsniveau in Abhängigkeit vom Flächenbelegungsgrad der Glasurschicht auf dem Substratmaterial verändern. Eine vollflächige Glasur führt im Allgemeinen zu niedrigeren Festigkeitswerten als eine lichte bzw. spärliche Rasterausführung der Glasurschicht. Erfolgen somit Teilglasuren nur einzelner Teile einer Oberfläche, so kann sich somit das angegebene Festigkeitsniveau der erfindungsgemäßen Glasur zu noch höheren Werten verschieben.

Die erfindungsgemäß verwendeten Gläser werden zu Glasfritten verarbeitet und unter Zusatz meist organischen Hilfsmitteln und ggf. Farbpigmenten zu geeigneten Pasten oder dergleichen verarbeitet, die über Siebdruck-, Abziehbild-, Sprüh- oder Pinselverfahren aufgetragen werden können. Die notwendigen, meist organischen Zusatzstoffe verflüchtigen sich beim Einbrand.

### Beispiele

In Tabelle 1 sind verschiedene erfindungsgemäß verwendete Gläser mit ihren Zusammensetzungen und mit den ermittelten Eigenschaften bei Verwendung als Glasur zusammengefasst.

Die betreffenden Gläser wurden erschmolzen und daraus Glasfritten mit mittleren Partikelgrößen zwischen 0,8 und 3 µm, zumeist zwischen 1 und 2,5 µm, hergestellt. Die in den Beispielen verwendeten Pigmente sind kommerziell erhältlich. Zwecks einer Auftragung mittels direktem Siebdruck wurden siebdruckfähige Pasten durch Zusatz von Siebdrucköl hergestellt.

Diese Pasten wurden auf Substrate aus Lithium-Aluminosilikat-Glaskeramiken aufgetragen, die insbesondere Hochquarz-Mischkristalle als Hauptkristallphase enthielten. Zusammensetzungen derartiger Glaskeramiken können etwa der EP 0 220 333 B1 oder der DE 199 39 787 C2 entnommen werden.

Derartige Glaskeramiken weisen einen sehr niedrigen thermischen Ausdehnungskoeffizienten von weniger als 2 · 10⁻⁶/K auf und weisen als Hauptkristallphase Hochquarz-Mischkristalle ggf. mit Keatit-Beimischungen auf.

In den Beispielen wurde das Dekor auf das keramisierbare Glas aufgetragen. Der Dekoreinbrand erfolgte gleichzeitig mit der Umwandlung des Trägerglases in eine Glaskeramik.

Nach dem Einbrand wurden, sofern nicht anders angegeben, Schichtdicken zwischen 2,8 und 3,2 µm gemessen.

Die Haftfestigkeit der Dekore auf der beschichteten Glaskeramik wurde mittels transparentem Klebeband (Tesa-Bild® Typ 104, Firma Beiersdorf) ermittelt. Hierzu wurde nach dem Anreiben auf die Dekorschicht und ruckartigem Abreißen beurteilt, ob und wie viele Dekorpartikel am Klebefilm anhafteten. Die Prüfung galt nur bei keinen oder nur sehr wenigen am Klebefilm anhaftenden Partikeln als bestanden.

In allen Aufgeführten Beispielen war die Haftfestigkeit in Ordnung, d.h. die Prüfung wurde bestanden.

Die Biegefestigkeit wurde nach der Doppelringmethode gemäß DIN 52300, Teil 5, an Probestücken mit einer Abmessung von 100 x 100 mm bestimmt, die in der Mitte einer Fläche von 50 x 50 mm vollständig beschichtet waren. Der Mittelwert der Festigkeit von mindestens 24 Proben ist in Tabelle 1 angegeben.

In Tabelle 2 sind einige Zusammensetzungen und Eigenschaften herkömmlicher Gläser zum Vergleich angegeben, die im Rahmen der aus den Schriften bekannten Zusammensetzungsbereichen erschmolzen wurden und getestet wurden.

Es ist erkennbar, dass bei sämtlichen der herkömmlichen Gläser in Tabelle 2 die Biegefestigkeit höchstens 50 MPa beträgt, teilweise erheblich darunter liegt. Dagegen werden mit den erfindungsgemäßen Gläsern gemäß Tabelle 1 Festigkeiten erzielt, die deutlich oberhalb von 70 MPa liegen.

**Tabelle 1**

| Zusammensetzung in Gew.-% und Eigenschaften erfindungsgemäß verwendeter Gläser | | | |
|---|---|---|---|
| Glas-Nr. | 1 | 2 | 3 |
| Li₂O | 5 | 2 | |
| Na₂O | | 4 | 4 |
| K₂O | | | |
| MgO | 2 | 2 | 2 |
| CaO | 2 | | |
| SrO | 2 | 2 | |
| BaO | | | 2 |
| ZnO | | | |
| B₂O₃ | 13 | 15 | 18 |
| Al₂O₃ | 6 | 5 | 4 |
| SiO₂ | 70 | 70 | 70 |
| ZrO₂ | | | |
| F | | | |
| T_{g} (°C) | 495 | 508 | 521 |
| E_{w} (°C) | | 724 | |
| α_{20-300°C} (10⁻⁶ /K) | 4,1 | 4,76 | 3,76 |
| Schichtdicke [µm] (ohne Pigmentzusatz) | 4, 1 | 5,0 | |
| Biegefestigkeit (MPa) (ohne Pigmentzusatz | 70,5 | 79 | 80 |
| Biegefertigkeit bei 20% Pigmentzusatz (Weiß) (MPa) | | | 58 |

**Tabelle 2**

| Zusammensetzungen (in Gew.-%) und Eigenschaften einiger herkömmlicher Gläser zum Emaillieren nebst Eigenschaften | | | | | | | |
|---|---|---|---|---|---|---|---|
| Glas-Nr. | 4 | 5 | 6 | 7 | 8 | 9 | 10 |
| Li₂O | 2,6 | | | 1, 1 | 3, 1 | 4,6 | 1 |
| Na₂O | 0,8 | 2,6 | | 9,2 | | 4,1 | 4 |
| K₂O | 3,4 | 1,25 | | 0,4 | | - | |
| MgO | | | | - | | 0,9 | - |
| CaO | 2,8 | | 1 | - | | 1,3 | - |
| SrO | | | | - | 2,3 | 1,8 | - |
| BaO | | | 26,1 | 2,6 | | - | - |
| ZnO | | | 14,5 | - | 2,2 | 0,2 | - |
| B₂O₃ | 27,4 | 14,75 | 4,9 | 19,1 | 16,7 | 17,5 | 21 |
| Al₂O₃ | 18,7 | 2,25 | 6,5 | 5 | 16,6 | 6 | 16 |
| SiO₂ | 41,8 | 78,3 | 47 | 62,4 | 54,3 | 60,3 | 54 |
| TiO₂ | | | | - | | - | 1 |
| ZrO₂ | 2,5 | | | - | 1,1 | 2,1 | 1 |
| As₂O₃ | | 0,85 | | - | | - | - |
| F | | | | 0,2 | | 1,2 | 2 |
| T_{g} (°C) | 493 | 501 | 655 | 520 | 578 | 475 | 480 |
| E_{w} (°C) | 680 | 819 | 830 | 670 | 775 | 630 | 745 |
| α_{20-300°C} (10⁻⁶/K) | 5,54 | 3,21 | 5,28 | 6,5 | 4,41 | 6,2 | 4,5 |
| | | | | | | | |

| Glas-Nr. | 4 | 5 | 6 | 7 | 8 | 9 | |
|---|---|---|---|---|---|---|---|
| Pigmentzusatz | - | - | - | - | - | - | |
| Biegefestigkeit (MPa) | 34 | 66 | 56 | 39 | 42 | 46 | |
| Pigmentzusatz | 20 % weiß | 20 % weiß | 20 % weiß | 20 % weiß | 20 % weiß | 20 % weiß | |
| Biegefestigkeit | 33 | 50 | 39 | 38 | 45 | 45 | |

## Patentansprüche

1. Verwendung eines Glases zum Glasieren, Emaillieren oder Dekorieren von Gläsern oder Glaskeramiken,die einen thermischen Ausdehnungskoeffizienten höchstens 4 • 10-⁶/K, vorzugsweise von höchstens 3,5 · 10⁻⁶/K, insbesondere von höchstens 2 • 10-⁶/K zwischen 20 und 700 °C aufweisen, wobei das Glas mindestens folgende Bestandteile enthält (in Gew.-%):
| | |
|---|---|
| Li₂O | 0-8 |
| Na₂O | 0-5 |
| K₂O | 0-8 |
| ΣR₂O | 0.1-10 |
| B₂O₃ | ≥ 6.5 |
| Al₂O₃ | 0-10 |
| MgO | 1-12 |
| SrO | 0-16 |
| CaO | 0-12 |
| BaO | 0-13 |
| TiO₂ | 0-4 |
| ZnO | 0-17 |
| SiO₂ | >65-75 |

2. Verwerdung nach Anspruch 1, wobei das Glas einen Gehalt an B₂O₃ 10 bis 20 Gew.-%aufweist.

3. Verwendung nach Anspruch 1 oder 2, wobei damit beschichtete Gläser oder Glaskeramiken, insbesondere LAS-Glaskeramiken, eine nach der Doppelringmethode ermittelte Biegefestigkeit von mindestens 70 MPa aufweisen.

4. Verwendung nach einem der vorhergehenden Ansprüche,wobei das Glas 0-4 Gew.-% an ZrO₂ enthält.

5. Verwendung nach einem der vorhergehenden Ansprüche, wobei bei dem Glas bis zum 3 Gew.-%, vorzugsweise bis zu 2 Gew.-% des Sauerstoffs durch Fluor ersetzt sind.

6. Verwendung nach einem der vorhergehenden Ansprüche, wobei das Glas einen Gehalt an Al₂O₃ von 0,1 bis 10 Gew.-%, vorzugsweise von mindestens 1 bis 8 Gew.-%, besonders bevorzugt von mindestens 3 Gew.-%, aufweist.

7. Verwendung nach einem der vorhergehenden Ansprüche, wobei das Glas ferner Zusätze von bis zu 3 Gew.-% mindestens einer Komponente enthält, die aus der durch SnO₂, Sb₂O₃, La₂O₃, Bi₂O₃ und P₂O₅ gebildeten Gruppe ausgewählt ist.

8. Verwendung nach Anspruch 7, wobei die Summe der ausgewählten Komponenten aus der durch SnO₂, Sb₂O₃, La₂O₃, Bi₂O₃ und P₂O₅ gebildeten Gruppe kleiner als 5 Gew.-% ist.

9. Verwendung nach einem der vorhergehenden Ansprüche,wobei das Glas einen Gehalt an K₂O von höchstens 2 Gew.-% aufweist.

10. Verwendung nach einem der vorhergehenden Ansprüche, wobei das Glas einen Gehalt an Li₂O von höchstens 7 Gew.-%, vorzugsweise höchstens 5,8 Gew.-%, aufweist.

11. Verwendung nach einem der vorhergehenden Ansprüche, wobei das Glas einen Summengehalt der Alkalioxide R₂O von höchstens 8 Gew.-% aufweist.

12. Verwendung nach einem der vorhergehenden Ansprüche, wobei das Glas einen Summengehalt an MgO+CaO+SrO+BaOvon höchstens 22 Gew.-% aufweist, vorzugsweise von mindestens 1 Gew.-%, besonders bevorzugt von mindestens 2 Gew.-% aufweist.

13. Verwendung nach einem der vorhergehenden Ansprüche, wobei das Glas einen Gehalt an MgO, CaO, SrO und BaO von höchstens je 8 Ges.-%, vorzugsweise von höchstens je 6 Gew-% aufweist.

14. Verwendung nach einem der vorhergehenden Ansprüche, wobei das Glas einen Gehalt an ZnOvon höchstens 6 Gew.-% aufweist.

15. Verwendung nach einem der vorhergehenden Ansprüche, bei der das Glas zu einer Glasfritte mit einem mittleren Partikeldurchmesser von höchstens 10 Mikrometer, bevorzugt von weniger als 6 Mikrometer, weiter bevorzugt von weniger als 4 Mikrometer, besonders bevorzugt von weniger als 3 Mikrometer vermahlen ist.

16. Verwendung nach einem der vorhergehenden Ansprüche,bei der die gemahlene Glasfritte mit Pigmenten, Füll- und zusatzstoffen versetzt ist, vorzugsweise von insgesamt höchstens 40 Gew.-%, weiter bevorzugt von insgesamt höchstens 30 Gew.-%.

17. Verwendung nach einem der vorhergehenden Ansprüche, zum Glasieren, Emaillieren oder Dekorieren von Lithium-Aluminosilikat-Glaskeramiken, insbesondere mit Hochquarz-Mischkristallen als Hauptkristallphase, insbesondere für Anwendungen als Kochflächen.

18. Verwendung nach einem der vorhergehenden Ansprüche, zum Applizieren der Glasfritte nach Anspruch 15, 16 oder 17 auf die Oberfläche eines zu beschichtenden Körpers und zum einbrennen.

19. Verwendung nach Anspruch 18, zum Einbrennen bei Temperaturen zwischen etwa 800 und 1200 °C.

20. Verwendung nach Anspruch 19, zum Einbrennen bei Temperaturen zwischen etwa 800 und 950 °C insbesondere bei Glaskeramiken mit Hochquarz-Mischkristallen.

21. Verwendung nach Anspruch 18, 19 oder 20, zum Beschichten mit einer Schichtdicke der eingebrannten Glasur auf 1 bis 5 Mikrometer.

22. Verwendung nach einem der Ansprüche 18 bis 21, zum Beschichten und Einbrennen während einer Keramisierung der Glaskeramik .

23. Verwendung nach einem der Ansprüche 18 bis 21, zum Beschichten und Einbrennen nach einer Keramisierung der Glaskeramik.

## Claims

1. Use of a glass for glazing, enamelling or decorating glasses or glass-ceramics which have a coefficient of thermal expansion of at most 4•10⁻⁶/K, preferably of at most 3.5•10⁻⁶/K in particular of at most 2•10⁻⁶/K between 20 and 700 °C, wherein the glass comprises at least the following constituents (in % by weight):
| | |
|---|---|
| Li₂O | 0-8 |
| Na₂O | 0-5 |
| K₂O | 0-8 |
| E R₂O | 0.1-10 |
| B₂O₃ | ≥ 6.5 |
| Al₂O₃ | 0-10 |
| MgO | 1-12 |
| SrO | 0-16 |
| CaO | 0-12 |
| BaO | 0-13 |
| TiO₂ | 0-4 |
| ZnO | 0-17 |
| SiO₂ | >65-75 |

2. The use according to claim 1, in which the B₂O₃ content is from 10 to 20 % by weight.

3. The use according to claim 1 or 2, in which glasses or glass-ceramics, in particular LAS glass-ceramics, coated with the glass have a flexural strength, determined by the double ring method, of at least 70 MPa.

4. The use according to one of the preceding claims, which further comprises 0-4% by weight of ZrO₂.

5. The use according to one of the preceding claims, in which up to 3% by weight, preferably up to 2% by weight of the oxygen is replaced by fluorine.

6. The use according to one of the preceding claims, which has an Al₂O₃ content from 0.1 to 10% by weight preferably from at least 1 to 8% by weight, particularly preferably of at least 3% by weight.

7. The use according to one of the preceding claims, which further comprises additions of up to 3% by weight of at least 1 component selected from the group consisting of SnOz, Sb₂O₃, La₂O₃, Bi₂O₃ and P₂O₅.

8. The use according to claim 7, in which the sum of the components selected from the group consisting of SnO₂, Sb₂O₃, La₂O₃, Bi₂O₃ and P₂O₅ is less than 5% by weight.

9. The use according to one of the preceding claims, in which the K₂O content is at most 2% by weight.

10. The use according to one of the preceding claims, in which the Li₂O content is at most 7% by weight, preferably at most 5.8%.

11. The use according to one of the preceding claims, in which the sum content of the alkali metal oxides R₂O is at most 8% by weight.

12. The use according to one of the preceding claims, in which the sum content of MgO + CaO + SrO + BaO is at most 22% by weight, preferably is at least 1% by weight, more preferably at least 2% by weight.

13. The use according to one of the preceding claims, in which the MgO, CaO, SrO and BaO contents are in each case at most 8% by weight, preferably in each case at most 6% by weight.

14. The use according to one of the preceding claims, in which the ZnO content is at most 6% by weight.

15. The use according to one of the preceding claims, which is milled to form a glass frit with a mean particle diameter of at most 10 micrometers, preferably of less than 6 micrometers, more preferably of less than 4 micrometers, particularly preferably of less than 3 micrometers.

16. The use according to one of the preceding claims, which as a milled glass frit is mixed with pigments, fillers and additives, preferably amounting to in total at most 40% by weight, more preferably in total at most 30% by weight.

17. The use according to any of the preceding claims for glazing, enamelling or decorating lithium aluminosilicate glass-ceramics, in particular comprising high quartz mixed crystals as the main crystal phase, in particular for applications as cooking plates.

18. The use of any of the preceding claims for applying a glass frit according to claim 15, 16 or 17 onto the surface of a body to be coated for firing.

19. The use according to claim 18, in which the firing operation takes place at temperatures between approximately 800 and 1200 °C.

20. The use according to claim 19, in which the firing operation is carried out at between 800 and 950°C, in particular in the case of glass-ceramics comprising high quartz mixed crystals.

21. The use according to claim 18, 19 or 20, in which the layer thickness of the fired glaze is set to 1 to 5 micrometers.

22. The use according to one of claims 18 to 21, in which the firing operation is carried out during the ceraming of the glass-ceramics.

23. The use according to one of claims 18 to 21, in which the firing operation is carried out after the ceraming of the glass-ceramics.

## Revendications

1. Utilisation d'un verre pour le vernissage, l'émaillage ou la décoration de verres ou de vitrocéramiques présentant un coefficient de dilatation thermique maximal de 4 * 10⁻⁶ K, de préférence de 3,5 * 10⁻⁶ K au maximum, en particulier de 2 * 10⁻⁶ K au maximum entre 20 et 700 °C, le verre contenant au moins les composants suivants (en pourcentage du poids) :
| | |
|---|---|
| Li₂O | 0-8 |
| Na₂O | 0-5 |
| K₂O | 0-8 |
| Σ R₂O | 0,1-10 |
| B₂O₃ | ≥ 6,5 |
| Al₂O₃ | 0-10 |
| MgO | 1-12 |
| SrO | 0-16 |
| CaO | 0-12 |
| BaO | 0-13 |
| TiO₂ | 0-4 |
| ZnO | 0-17 |
| SiO₂ | > 65-75 |

2. Utilisation selon la revendication 1, où le verre présente une teneur en B₂O₃ comprise entre 10 et 20 % en poids.

3. Utilisation selon la revendication 1 ou 2, où des verres ou des vitrocéramiques ainsi revêtues, en particulier des vitrocéramiques LAS, présentent une résistance à la flexion d'au moins 70 MPa, déterminée par la méthode à doubles anneaux.

4. Utilisation selon l'une des revendications précédentes, où le verre contient entre 0 et 4 % en poids de ZrO₂.

5. Utilisation selon l'une des revendications précédentes, où jusqu'à 3 % en poids, de préférence jusqu'à 2 % en poids de l'oxygène du verre sont remplacés par du fluor.

6. Utilisation selon l'une des revendications précédentes, où le verre présente une teneur en Al₂O₃ de 0,1 à 10 % en poids, avantageusement d'au moins 1 à 8 % en poids, et de préférence d'au moins 3 % en poids.

7. Utilisation selon l'une des revendications précédentes, où le verre contient en outre des additifs jusqu'à 3 % en poids d'au moins un composant sélectionné dans le groupe formé par SnO₂, Sb₂O₃, La₂O₃, Bi₂O₃ et P₂O₅.

8. Utilisation selon la revendication 7, où le total des composants sélectionnés dans le groupe formé par SnO₂, Sb₂O₃, La₂O₃, Bi₂O₃ et P₂O₅, est inférieur à 5 % en poids.

9. Utilisation selon l'une des revendications précédentes, où le verre présente une teneur en K₂O de 2 % en poids au maximum.

10. Utilisation selon l'une des revendications précédentes, où le verre présente une teneur en Li₂O de 7 % en poids au maximum, de préférence de 5,8 % en poids au maximum.

11. Utilisation selon l'une des revendications précédentes, où le verre présente une teneur totale en oxydes alcalins R₂O de 8 % en poids au maximum.

12. Utilisation selon l'une des revendications précédentes, où le verre présente une teneur totale en MgO + CaO + SrO + BaO de 22 % en poids au maximum, avantageusement d'au moins 1 % en poids, et de préférence d'au moins 2 % en poids.

13. Utilisation selon l'une des revendications précédentes, où le verre présente une teneur en MgO, CaO, SrO et BaO de 8 % en poids au maximum chaque, de préférence de 6 % en poids au maximum chaque.

14. Utilisation selon l'une des revendications précédentes, où le verre présente une teneur en ZnO de 6 % en poids au maximum.

15. Utilisation selon l'une des revendications précédentes, où le verre est broyé pour former une fritte de verre avec un diamètre moyen de particule de 10 micromètres au maximum, avantageusement inférieur à 6 micromètres, très avantageusement inférieur à 4 micromètres, et de préférence inférieur à 3 micromètres.

16. Utilisation selon l'une des revendications précédentes, où à la fritte de verre sont ajoutés des pigments, des agents de charge et des additifs, avantageusement pour un total de 40 % en poids au maximum, et de préférence pour un total de 30 % en poids au maximum.

17. Utilisation selon l'une des revendications précédentes, pour le vernissage, l'émaillage ou la décoration de vitrocéramiques au silicate de lithium-aluminium, en particulier à solutions solides de bêta-quartz en tant que phase cristalline principale, en particulier pour des applications telles que surfaces de cuisson.

18. Utilisation selon l'une des revendications précédentes, pour l'application de la fritte de verre selon les revendications 15, 16 ou 17 sur la surface d'un corps à revêtir et pour la cuisson.

19. Utilisation selon la revendication 18, pour la cuisson à températures comprises entre 800 °C et 1 200 °C environ.

20. Utilisation selon la revendication 19, pour la cuisson à températures comprises entre 800 °C et 950 °C environ, en particulier en cas de vitrocéramiques à solutions solides de bêta-quartz.

21. Utilisation selon les revendications 18, 19 ou 20, pour le revêtement avec une épaisseur de couche comprise entre 1 et 5 micromètres pour la glaçure cuite.

22. Utilisation selon l'une des revendications 18 à 21, pour le revêtement et la cuisson pendant une céramisation de la vitrocéramique.

23. Utilisation selon l'une des revendications 18 à 21, pour le revêtement et la cuisson après une céramisation de la vitrocéramique.
